# EUROPEAN PATENT APPLICATION

(11) **EP 3 892 572 A1**
(43) Date of publication of application: **13.10.2021**
(21) Application number: 19897969.2
(22) Date of filing: 13.12.2019
(51) Int. Cl.: B65G 27/04, G01G 19/387

(54) **STRAIGHT ADVANCE FEEDER AND COMBINATION WEIGHING DEVICE PROVIDED WITH SAME**

(30) Priority: 19.12.2018 JP 2018237043
(71) Applicant: Yamato Scale Co., Ltd., Akashi-shi, Hyogo 673-0849 (JP)
(72) Inventor: SUEMICHI Ryo, Akashi-shi, Hyogo 673-0849 (JP); UNO Naho, Akashi-shi, Hyogo 673-0849 (JP)
(74) Representative: Ter Meer Steinmeister & Partner
(86) International application number: PCT/JP2019/048985
(87) International publication number: WO 2020/129851

(57) **Abstract**

A linear feeder is provided that vibrates a trough to transport articles on the trough. The trough has a guiding protrusion at an intermediate position on a bottom surface of a transport path in a direction of its width. The guiding protrusion is progressively greater in lateral width in a direction of transport of the articles, and transport passages progressively smaller in width are accordingly formed at sides of the guiding protrusion.

## Description

### TECHNICAL FIELD

The present invention relates to a linear feeder that vibrationally transports articles including foodstuffs, snacks and sweets, and a combination weighing device equipped with the linear feeder, more particularly to a linear feeder suitable for use in vibrationally transporting small quantities of articles and to a combination weighing device suitable for use in mixing and weighing small quantities of different kinds of articles that range in a wide variety.

### BACKGROUND ART

Patent document 1 describes an example of combination weighing devices designed to mix and weigh different kinds of articles. The combination weighing device described in this patent document is equipped with a large number of weighing units and linear feeders disposed correspondingly to these weighing units. The weighing units and the linear feeders are respectively disposed in juxtaposition in a lateral direction. In this combination weighing device, articles are once stored in retaining hoppers and then dropped downward to article-incoming ends of the linear feeders. Then, the articles are vibrationally transported by these linear feeders into the weighing units disposed correspondingly to the linear feeders.

### CITATIONS LIST

### PATENT DOCUMENT

Patent Document 1: Japanese Unexamined Patent Publication No. 2018-77074

### SUMMARY OF INVENTION

### TECHNICAL PROBLEMS

Such articles as small fishes cooked in mirin (sweet sake) may easily stick together in a lump and may often be difficult to be transported in small quantities to the weighing units. When, for example, snacks to go with alcohol drinks are prepared in which nuts, bean snacks and/or cubic rice crackers are mixed with one or two small fishes cooked in mirin, the linear feeder may certainly have difficulty in transporting such small fishes in small quantities to the weighing unit, for example, the small fishes may not be transported at all or may be oversupplied to the weighing units. To ensure that the small fishes are supplied in small quantities to weighing hoppers, an additional measure(s) may be necessary, for example, preparing more linear feeders and weighing units for such small fishes.

The present invention was accomplished to address these issues of the known art and is directed to providing a linear feeder allowed to smoothly transport articles likely to stick together in a small quantity at a time, and a combination weighing device operable to mix and weigh articles using such a linear feeder.

### TECHNICAL SOLUTIONS

To this end, the present invention provides the following technical features.

1) A linear feeder according to the present invention is configured to vibrate a trough to transport an article on the trough. The linear feeder has a guiding protrusion on a bottom surface of a transport path of the trough for the article. The guiding protrusion is formed in a direction of transport of the article at an intermediate position in a direction of width of the transport path and is progressively greater in dimension in the direction of width. The transport path includes transport passages progressively smaller in width at sides of the guiding protrusion.

According to the present invention, if the target articles are likely to stick together in a lump, such articles may be split by the guiding protrusion while they are being vibrationally transported and then guided to sides of the trough along its width. Then, the articles may be transported in small quantities on two passages of the transport path progressively smaller in width at sides of the guiding protrusion. Thus, articles to be weighed, even if they are likely to stick together, may be smoothly transported in a small quantity at a time.
2) According to a preferred embodiment of the present invention, the guiding protrusion may be formed at a position on a downstream side in the direction of transport of the article, and the guiding protrusion may be formed to a progressively greater height in the direction of transport.

Some of the articles to be weighed may be likely to stick together in a lump as they are being vibrationally transported. According to this embodiment, such articles may be guided to run over and split by the guiding protrusion onto two narrower passages of the transport path formed at sides of the trough in the direction of width, and then thrown, in a small quantity at a time, out of the trough from its downstream side.

3) According to another embodiment of the present invention, the linear feeder may include two troughs respectively disposed on an upstream side and on the downstream side in the direction of transport. The linear feeder may be further characterized in that these two troughs are disposed in tandem, with one of them being located at an upper position than the other, like a stepwise slope directed downward, and the trough on the upstream side has the guiding protrusion and the transport passages progressively smaller in width.

According to this embodiment, the articles split by the guiding protrusion are transported in a small quantity at a time in the upper upstream trough and are dropped downward into the lower downstream trough. The drop impact generated at the time may successfully split the articles apart into pieces even if they are likely to stick together in a lump.

4) According to yet another embodiment of the present invention, the linear feeder may include a vibrating mechanism operable to vibrate the two troughs independently from each other.

According to this embodiment, the upstream trough and the downstream trough may be independently driven to vibrate in response to a current status of transport. The articles likely to stick together in a lump, may be successfully split apart into pieces and transported.

5) A combination weighing device according to the present invention includes a plurality of the linear feeders recited in one of 1) to 4).

In this combination weighing device, any articles likely to stick together may be transported smoothly by the linear feeder provided by the present invention and suitably subjected to a combinatorial weighing operation.

6) According to a preferred embodiment of the present invention, the combination weighing device may include: a plurality of the linear feeders linearly arranged next to each other; and a plurality of weighing units linearly arranged next to each other, the plurality of weighing units each including a supply hopper and a weighing hopper that are vertically disposed. The combination weighing device may be further characterized in that the supply hoppers each receive the article transported by and supplied from a respective one of the plurality of the linear feeders, and the weighing hoppers each retain the article discharged from a respective one of the supply hoppers and measure a weight of the article retained.

According to this embodiment, the weighing units each including the supply hopper and the weighing hopper that are vertically disposed are linearly arranged next to each other, and the linear feeders that supply the supply hoppers with the articles are linearly arranged next to each other. When, for example, an operator wants to use a greater number of weighing units to supply the supply hoppers with a broader range of articles, the weighing units and the linear feeders, which are respectively linearly arranged, may be simply increased in the directions of their linear arrangement. The combination weighing device, therefore, may be allowed to have a relatively flat and compact structure.

### EFFECT OF THE INVENTION

The linear feeder provided by the present invention may ensure smooth transport of sticky articles when they need to be transported in a small quantity at a time. The combination weighing device provided by the present invention may successfully perform a combinatorial weighing operation for articles including sticky materials.

### BRIEF DESCRIPTION OF THE DRAWINGS

Fig. 1 is a schematic side view of a combination weighing device according to an embodiment of the present invention.
Fig. 2 is a schematic plan view of the combination weighing device illustrated in Fig. 1.
Fig. 3 is a schematic front view of one of weighing devices illustrated in Fig. 1.
Fig. 4 is a schematic front view of the other weighing device illustrated in Fig. 1.
Fig. 5 is a side view of principal components of the weighing device.

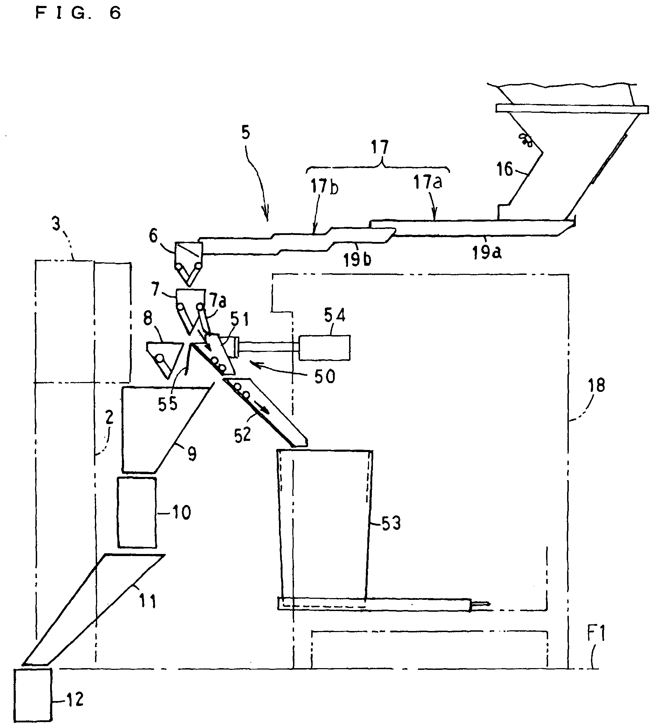

Fig. 6 is a side view of principal components of the weighing device during a REJECT status.
Fig. 7A is a plan view of a linear feeder produced according to a standard specification.
Fig. 7B is a longitudinal side view in part of the standard-spec linear feeder.
Fig. 8A is a plan view of a linear feeder produced according to a different specification.
Fig. 8B is a longitudinal side view of the different-spec linear feeder.
Fig. 9 is a perspective view of the different-spec linear feeder.
Fig. 10 is an exploded perspective view of a tank structure.
Fig. 11A is a side view illustrating steps of tank structure mounting steps.
Fig. 11B is a side view illustrating tank structure mounting steps.
Fig. 11C is a side view illustrating tank structure mounting steps.
Fig. 12 is a schematic perspective view of a belt conveyer and an article split-and-guide member.
Fig. 13 is a schematic plan view of Fig. 12.

### DESCRIPTION OF EMBODIMENTS

Embodiments of the present invention are hereinafter described in detail with reference to the accompanying drawings.

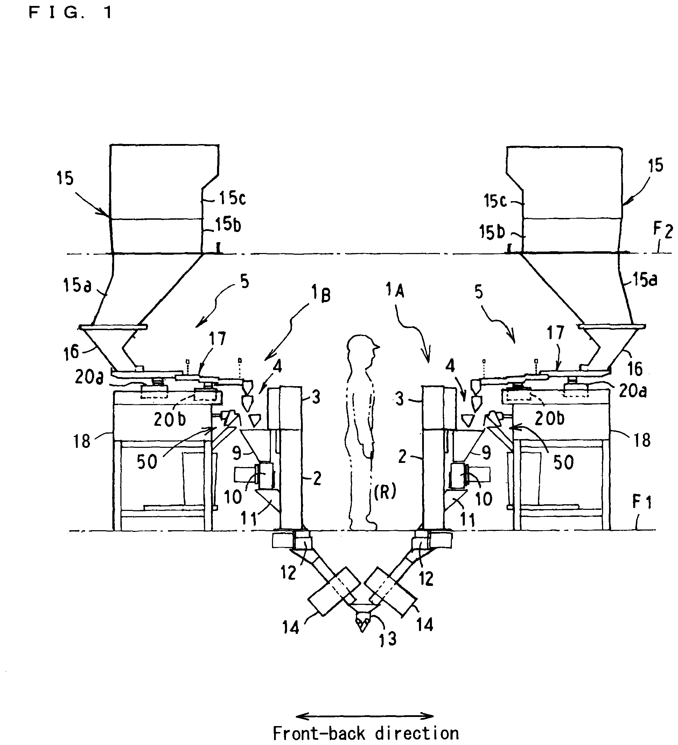

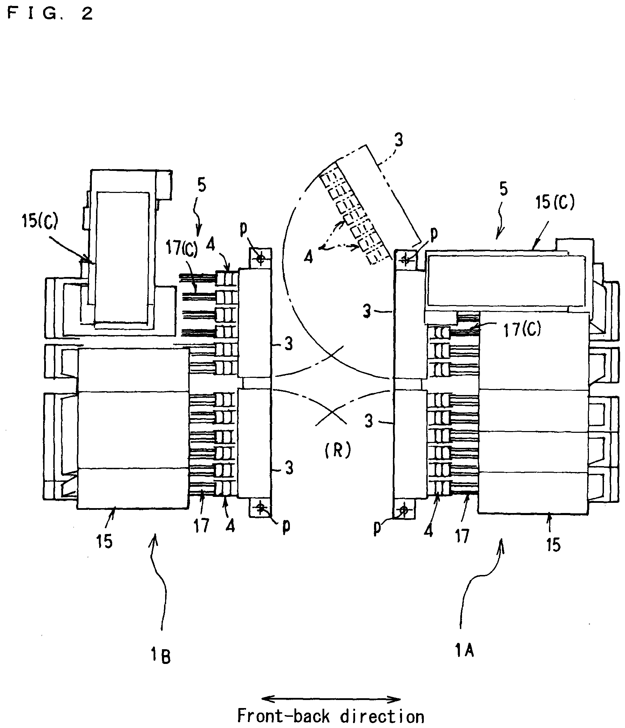

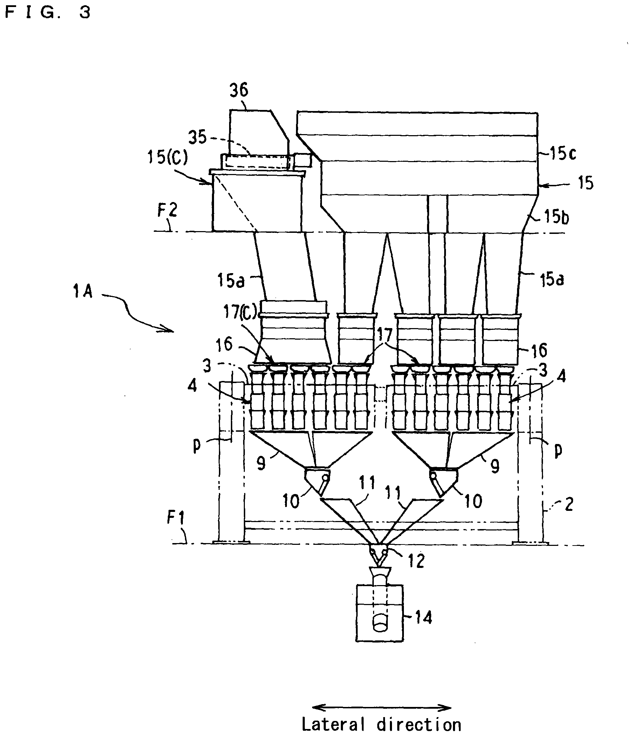

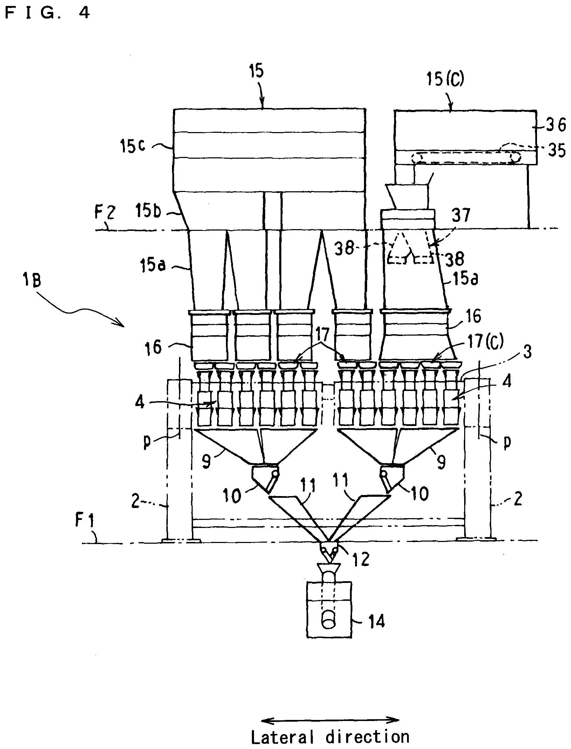

Fig. 1 is a schematic side view of a combination weighing device according to an embodiment of the present invention. Fig. 2 is a schematic plan view of the combination weighing device. Figs. 3 and 4 are schematic front views of weighing devices.

The combination weighing device according to this embodiment is for use in mixing and weighing predetermined quantities of articles that range in a wide variety (for example, eight kinds of articles) such as foodstuffs including snacks and sweets. More specifically, this combination weighing device may be suitably used to mix and weigh, for example, snacks to go with alcohol drinks in which nuts, bean snacks and/or cubic rice crackers are mixed into pouches with one or two small fishes cooked in mirin.

This combination weighing device is installed on a first floor surface F1 for use in a packaging line, in which weighed articles are thrown in and packed into bags in a packaging apparatus, not illustrated in the drawing, located on a lower level than the floor surface.

For readability of this specification to better understand the structural features of this combination weighing device, a front-back direction is hereinafter used to refer to the transverse direction on the drawings of Figs. 1 and 2, and the direction from the near to far side on the drawings of Figs. 3 and 4. Further, a lateral direction is hereinafter used to refer to the direction from the near to far side on the drawing of Fig. 1, and the transverse direction on the drawings of Figs. 3 and 4.

As illustrated in Fig. 1, the combination weighing device includes a pair of weighing devices 1A and 1B. These weighing devices 1A and 1B are disposed on the front and back sides in a manner that they face each other, with a central passage R being interposed therebetween. An operator of these weighing devices is allowed to move laterally, from right to left and vice versa, through this central passage R. The weighing devices 1A and 1B are essentially configured likewise, structural features of which are hereinafter described.

On the inner sides of the weighing devices 1A and 1B (on the sides of the central passage R), two bases 3 are each disposed on a support frame 2 vertically disposed on the first floor surface F1 and thereby stands to a predetermined height. The bases 3 are disposed so as to extend in the lateral direction. On the outer sides of the bases 3 (on the sides opposite to the central passage R), multiple weighing units 4 are disposed in a row in the lateral direction. In the illustrated example, the weighing devices 1A and 1B are each equipped with 12 weighing units 4 that are lined up in a row. A wide variety of articles may be successfully mixed and weighed with these 24 weighing units 4, in total, of the weighing devices 1A and 1B.

An article supplier 5 is disposed on the outer side of the weighing units 4. The article supplier 5 supplies various kinds of articles to be weighed to positions above the weighing units 4.

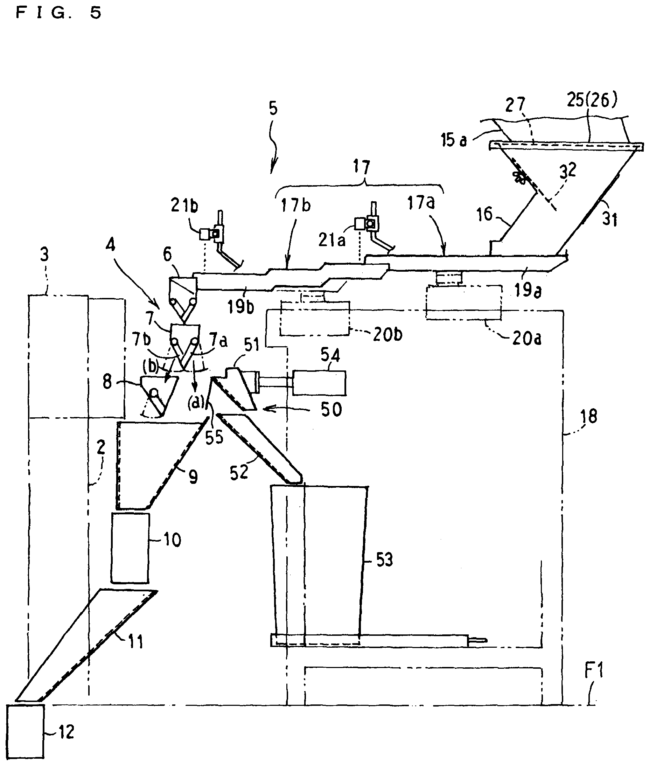

As illustrated in Fig. 5, the weighing units 4 are essentially configured as in the known art. The weighing units 4 each include a supply hopper 6, a weighing hopper 7, and a memory hopper 8. These hoppers 6, 7 and 8 are vertically disposed in a row and respectively have gates adapted to open and close. The supply hopper 6 receives articles transported from the article supplier 5 and then temporarily retains and discharges the received articles. The weighing hopper 7 retains the articles discharged from the supply hopper 6 and then weighs and discharges the retained articles. The memory hopper 8 receives the articles weighed by and discharged from the weighing hopper 7 and then temporarily retains and discharges the received articles.

The supply hopper 6, weighing hopper 7, and memory hopper 8 are detachably fitted to the base 3. In the base 3 are housed such devices as a mechanism to open and close the gates of these hoppers and a weight sensor used to measure the weights of the weighing hoppers 6.

As illustrated with a virtual line in Fig. 2, the bases 3 are supported in upper parts of the support frame 2 in a manner that these bases are pivotable around fulcrums p vertically extending at lateral ends. When the base 3 is pivoted toward the central passage R around the fulcrum vertically extending at the lateral end to have the weighing units 4 exposed to a large extent, the hoppers and other components may be easily attached and detached to and from the base 3 for maintenance and other purposes.

As illustrated in Fig. 5, the weighing hopper 7 has, at its lower end, an outer gate 7a and an inner gate 7b that are adapted to independently open and close. When the outer gate 7a alone is oscillated to open, the weighed articles are discharged directly into a first collection chute 9 disposed below through a first outgoing path (a). When the inner gate 7b alone is oscillated to open, the weighed articles are discharged into the memory hopper 8 through a second outgoing path (b) and temporarily retained in the memory hopper 8.

The weighing units 4 are each equipped with a memory hopper 8. These memory hoppers 8, as well as the weighing hoppers 7, may be allowed to participate in combinatorial computations. Thus, more hoppers may be available for combinatorial computations (available hoppers).

At positions below the weighing hoppers 7 and the memory hoppers 8, four first collection chutes 9 are disposed in a row in the lateral direction. These first collection chutes 9 collect the articles dropping downward from the weighing hoppers 7 or the memory hoppers 8 determined and selected as having a predetermined combined weight by the combinatorial computations. Two first collection hoppers 10 are each disposed at a position below two adjacent ones of the first collection chutes 9. These first collection hoppers 10 temporarily receive and retain the articles collected by the first collection chutes 9. Two second collection chutes 11 are disposed at positions below the first collection gates 10. These second collection chutes 11 guide and collect the articles dropping downward from the first collection gates 10. In a respective one of the weighing devices 1A and 1B, a second collection hopper 12 is disposed at a position below the second collection chutes 11. In the second collection hopper 12 are gathered together and temporarily retained the articles weighed and collected by the 12 weighing units 4.

As illustrated in Fig. 1, a final collection hopper 13 is disposed at a position down below the central passage R. In the final collection hopper 13 are gathered together the articles discharged from the second collection hoppers 12 of both of the weighing devices 1A and 1B. This final collection hopper 13 is opened and closed in response to a supply request instruction outputted from the packaging apparatus. A metal detector 14 is disposed in a guiding path through which the articles are dropping downward from the second collection hopper 12 into the final collection hopper 13. The metal detector 14 monitors whether the articles are contaminated with any metallic foreign matter.

The article supplier 5 has retaining tanks 15 in which the articles are retainable, and retaining hoppers 16 continuous to lower ends of the retaining tanks 15. The article supplier 5 further has 12 linear feeders 17. The linear feeders 17 are disposed next to each other in the lateral direction at positions above a support table 18. The linear feeders 17 vibrationally transport the articles dropping downward from lower ends of the retaining hoppers 16 into the 12 weighing units 4.

The retaining tanks 15 include a lower-stage tank 15a, a mid-stage tank 15b, and an upper-stage tank 15c. The lower-stage tank 15a is fitted into and supported by the opening of a second floor surface F2 located at a position way above the first floor surface F1. The mid-stage tank 15b is detachably and supportably fitted to an upper part of the lower tank 15a, and the upper-stage tank 15c is attached likewise to an upper part of the mid-stage tank 15b. The retaining hopper 16 is detachably and supportably coupled to a lower end of the lower-stage tank 15a as described later.

As illustrated in Fig. 5, the linear feeder 17 includes two linear feeders; an upstream linear feeder 17a, and a downstream linear feeder 17b, which are respectively disposed on upstream and downstream sides in the direction of transport of articles. The upstream linear feeder 17a and the downstream linear feeder 17b are disposed in tandem, with the upstream linear feeder being located at an upper position than the downstream one, like a stepwise slope directed downward. These linear feeders 17a and 17b respectively have troughs 19a and 19b and vibration generating mechanisms 20a and 20b. The troughs 19a and 19b are shaped in the form of a groove in cross section. The vibration generating mechanisms 20a and 20b are disposed at upper positions of the support table 18. The troughs 19a and 19b are detachably coupled to vibration heads of the vibrating mechanisms 20a and 20b.

The articles thrown out of the retaining hopper 16 into the upstream linear feeder 17a are vibrationally transported into the downstream linear feeder 17b. Then, the articles are thrown, in a small quantity at a time, out of the article-outgoing end of the downstream linear feeder 17b into the supply hopper 6 of the weighing unit 4.

Article sensors 21a and 21b are disposed at positions above the linear feeder 17. These article sensors 21a and 21b may detect, using, for example, laser, heights of the articles piled up at the article-incoming end and the article-outgoing end of the downstream linear feeder 17b. The vibrating mechanisms 20a and 20b are driven to generate vibration based on information of article detection outputted from the article sensors 21a and 21b, so that the linear feeders 17 are each allowed to uniformly transport the articles.

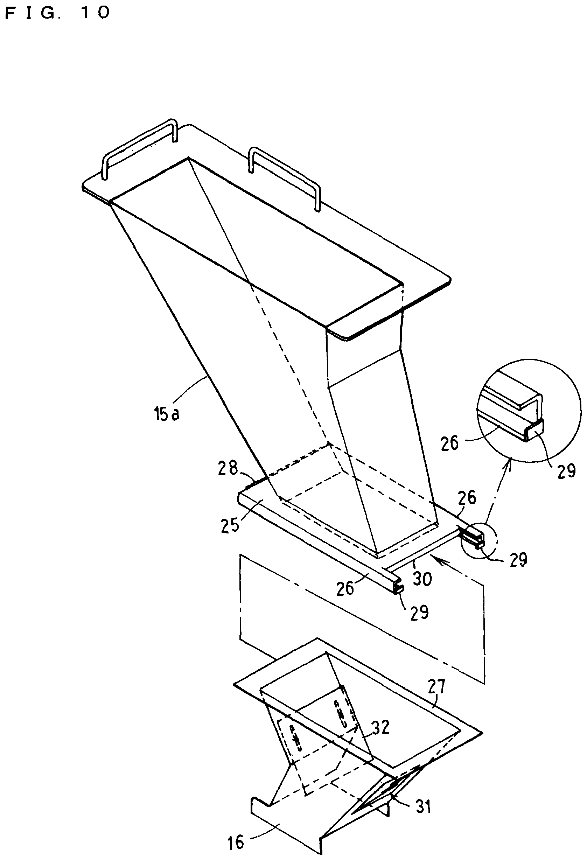

Next are described structural features that allow the retaining hopper 16 to be detachably and supportably coupled to a lower end of the lower-stage tank 15a among the retaining tanks 15. As illustrated in Fig. 10, the lower-stage tank 15a has, at its lower end, a hopper supporter 25 slightly larger than an opening at the lower end of this tank. The hopper supporter 25 has a pair of support rails 26 on right and left sides. The support rails 26, bending inward so as to face each other, are formed with a predetermined interval therebetween.

A flange 27 is formed so as to extend from a rectangular throw-in port formed at an upper end of the retaining hopper 16. This flange 27 can be pushed and pulled, from the rear side (from the side opposite to the central passage R), in and out of the support rails 26 of the hopper supporter 25. A first stopper 28, horizontally long and bending upright, is formed at a position on the inner end side (on the side of the central passage R) of the hopper supporter 25 to receive the front end side of the inserted flange 27. Second stoppers 29, vertically small and bending upright, are formed at positions on the outer end side (from the side opposite to the central passage R) to receive the lateral rear ends of the inserted flange 27.

A hopper restrictor 30, bending downward, is formed on an outer side of the hopper supporter 25 to prevent the supported retaining hopper 16 from rising upward. An interval between a lower end of the hopper restrictor 30 and an upper end of the second stopper 29 has a dimension large enough to allow the flange 27 to pass through.

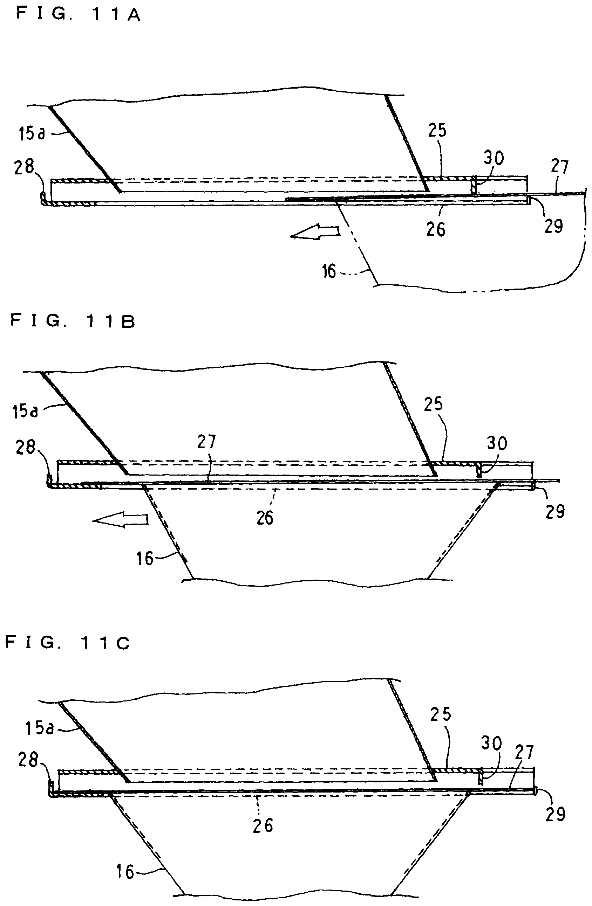

In order to couple the retaining hopper 16 to the lower-stage tank 15a, as illustrated in Figs. 11A to 11C, the retaining hopper 16 is inclined with the front side of its flange 27 being slightly directed downward, and the retaining hooper 16 thus inclined is located in proximity to the hopper supporter 25 and then inserted into the support rails 26 through the interval between the lower end of the hopper restrictor 30 and the upper end of the second stopper 29.

When the front end side of the flange 27 is butted against the first stopper 28, the retaining hopper 16 is prevented from advancing any further into the rails. At the time, the rear end side of the flange 27 has been moved forward to a position past the second stopper 29. The retaining hopper 16 is then put back to its horizontal position again, and right and left end sides of the flange 27 are pushed into the support rails 26. Thus, front and rear end sides of the flange 27 are positionally settled by the first stopper 28 and the second stopper 29 and are thereby immovable forward and backward. As a result, the retaining hopper 16 is located and supportably suspended in a manner that for-, back-, right-, and leftward movements are not allowed relative to the lower-stage tank 15a.

In order to remove the retaining hopper 16 supported by the support rails 26, the rear part of the retaining hopper 16 is slightly lifted upward, and the front end side of the flange 27 is moved to an upper position than the second stopper 29. When the retaining hopper 16 is then pulled outward, the retaining hopper 16 is removable from the lower-stage tank 16a.

Thus, the retaining hopper 16 may be readily attachable and removable to and from the support rails 26 without using any tool. Further advantageously, the retaining hoper 16 simply structured with the flange 27 alone may be easily handleable during, for example, cleaning.

The retaining hopper 16 is supportably suspended from the lower-stage tank 15a, which makes it unnecessary to additionally provide a support member, like a frame, to support the retaining hopper 16. This may avoid the risk of interference of such a frame with the retaining hopper 16 when attached and detached to and from the tank.

As described earlier, the lower-stage tank 15a is fitted in and supported by the opening on the second floor surface F2. The mid-stage tank 15b is positioned to and supported by the lower-stage tank 15a, and the upper-stage tank 15c is positioned to and supported by the mid-stage tank 15b by having their convex and concave shapes fitted into each other. These tanks 15a to 15c may be readily attachable and removable without using any tool and thus easily handleable during, for example, cleaning.

As illustrated in Figs. 5 and 10, the retaining hopper 16 has a monitoring window 31 on a side surface of a vertically intermediate part thereof. An operator is allowed to watch, through this monitoring window 31, whether the articles are being retained and how many articles are currently retained in the retaining hopper 16. The retaining hopper further has a sliding shutter 32 at a vertically intermediate part thereof. An opening area at the lower end of the retaining hopper 16 may be adjustable by controlling the sliding shutter 32. The articles may be guided to flow downward at an opening degree of the sliding shutter 32 suitably set for the type of articles being transported. The retaining hopper 16, when its lower end is completely closed, is removable with the articles still remaining therein.

The tanks and feeders described thus far may be standard-spec components used to supply articles that hardly stick together like nuts, bean snacks, and cubic rice crackers. Some linear feeders used to transport, in a small quantity at a time, sticky articles like small rice crackers or small fishes cooked in mirin, and retaining tanks 15 used with such linear feeders are configured differently to the standard-spec ones. In the example described below, of the 12 linear feeders 17 disposed in juxtaposition in the lateral direction, four linear feeders 17(C) on one end side in the lateral direction and a retaining tank 15(C) disposed correspondingly to these feeders are configured according to a specification that differs from the standard specification, as illustrated in Figs. 2 to 4. This structural feature is hereinafter described.

The different-spec retaining tankl5(C) is provided with a belt conveyer 35 having a large width. This belt conveyer is used to transport articles, smooth downward flow of which may be difficult under their own weights. The belt conveyer 35 is so disposed that is horizontally pivotable along a lower part of an upper tank 36 having a rectangular cylindrical shape, as illustrated in Figs. 3 and 4. By driving the belt conveyer 35 to rotate, the articles retained at the bottom of the upper tank 36 may be forced out of the tank and allowed to widely flow downward into the retaining hopper 16 through the lower-stage tank 15a.

In the illustrated example, the retaining tank 15(C) of the weighing device 1A and the retaining tank 15(C) of the weighing device 1B are differently situated and installed. As for the retaining tank 15(C) of the weighing device 1A, the belt conveyer 35 is rotated in the front-back direction parallel to the direction of transport of articles by the linear feeders 17. As for the retaining tanks 15(C) of the weighing device 1B, on the other hand, the belt conveyer 35 is rotated in the lateral direction orthogonal to the direction of transport of articles by the linear feeders 17.

The articles dropped and discharged from the article-outgoing end of the belt conveyer 35 are guided into the retaining hopper 16 through the lower-stage tank 15a. As for the retaining tank 15(C) of the weighing device 1B, the articles widely flowing out of the article-outgoing end of the belt conveyer 35 are transported into the lower-stage tank 15a. While the four linear feeders 17(C) are disposed in juxtaposition in the lateral direction, the articles are transported out of the belt conveyer 35 widely in the front-back direction extending along the direction of width of the belt conveyer 35.

Supposing that the articles transported from the belt conveyer 35 for the retaining tank 15(C) of the weighing device 1B are dropped immediately downward, two near-center ones of the four linear feeders 17(C) laterally arranged in juxtaposition may be abundantly supplied with the articles, whereas the linear feeders 17(C) on the right and left end sides may only receive fewer articles. The linear feeders 17(C) are supposed to supply a respective one of the supply hoppers 6 with the articles in a small quantity at a time. Yet, if the articles supplied from the belt conveyer 35 to the article-incoming ends of the linear feeders 17(C) are thus variable in quantity, the supply hoppers 6 may possibly be oversupplied with the articles or may fail to receive any article.

Thus, the articles transported by the belt conveyer 35 may possibly be supplied to an off-center position(s) in the lower-stage tank 15a. To prevent that, the weighing device 1B has, in the lower-stage tank 15a, an article split-and-guide member 37 with a pair of split funnels 38. As illustrated in Fig. 4, the article split-and-guide member 37, using the paired split funnels 38, guide the articles discharged from the belt conveyer 35 to flow downward and disperse in the lateral direction in which the four linear feeders 17(C) are arranged.

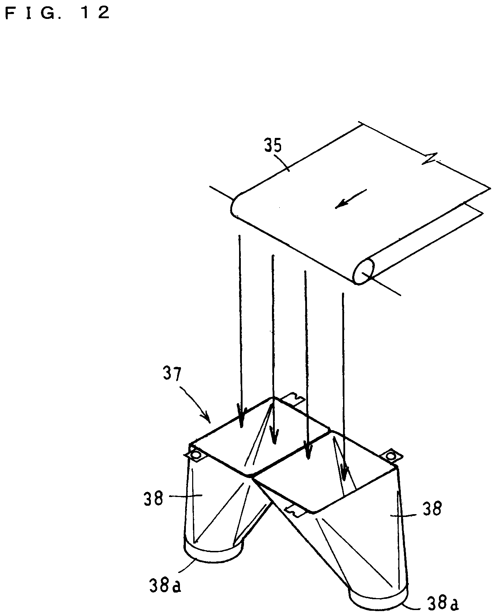

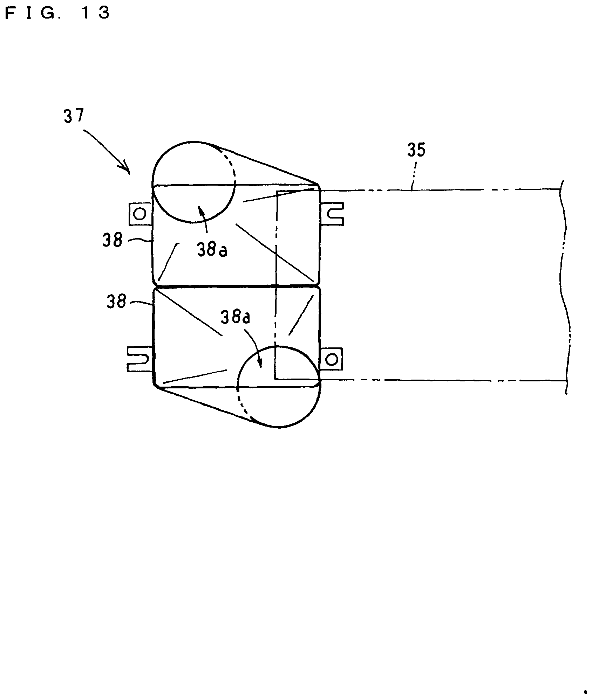

Fig. 12 is a schematic perspective view illustrating the belt conveyer 35 and the article split-and-guide member 37 of the weighing device 1B. Fig. 13 is a schematic plan view of Fig. 12.

The two split funnels 38 are disposed in adjacency to each other along the direction of width of the belt conveyer 35 (front-back direction). The split funnels 38 are so disposed that a border between rectangular inlets at upper ends of these funnels 38 falls on the center of the belt conveyer 35 in the direction of its width.

The split funnels 38 respectively have circular outlets 38a at lower ends. The lower-end outlets 38a of the split funnels 38 are displaced relative to rectangular upper-end inlets of these funnels. The lower-end outlets 38a of the two split funnels 38 disposed in adjacency are distanced from each other in the lateral direction in which the four linear feeders 17(C) are arranged, i.e., in the direction of transport of the belt conveyer 35.

The articles, after being discharged from the article-outgoing end of the belt conveyer 35 and widely dropped to an upper part of the lower-stage tank 15a in the direction of belt width (front-back direction), are guided by the two split funnels 38 to flow downward and disperse in the lateral direction in which the linear feeders 17(C) are arranged. Thus, the articles may be allowed to disperse evenly or relatively evenly and thrown into the article-incoming ends of the four linear feeders 17(C).

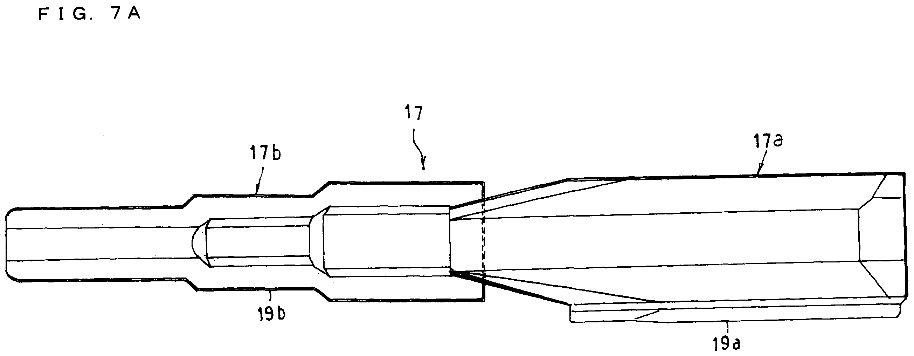

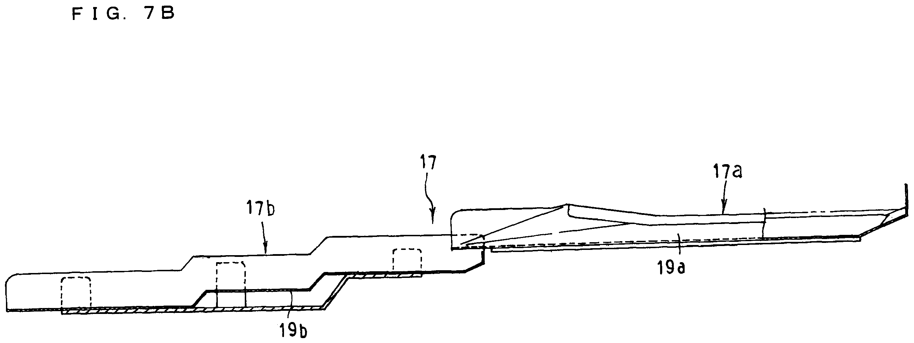

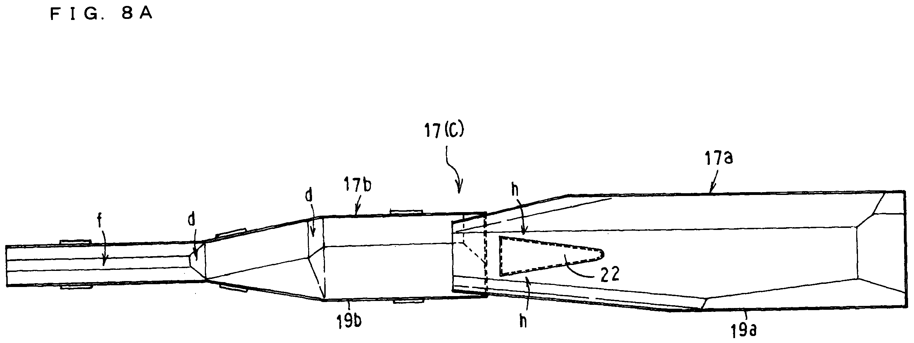

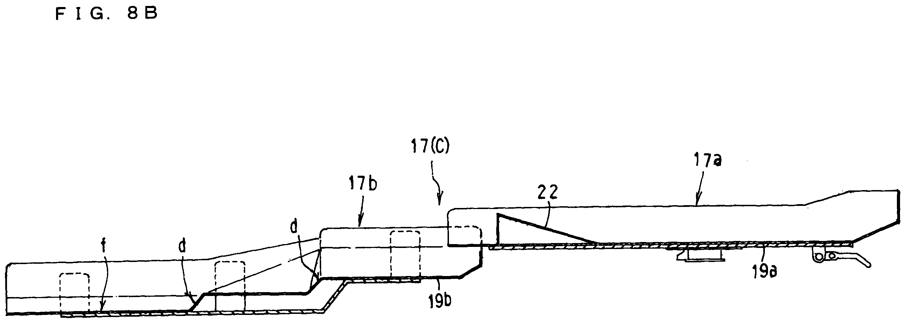

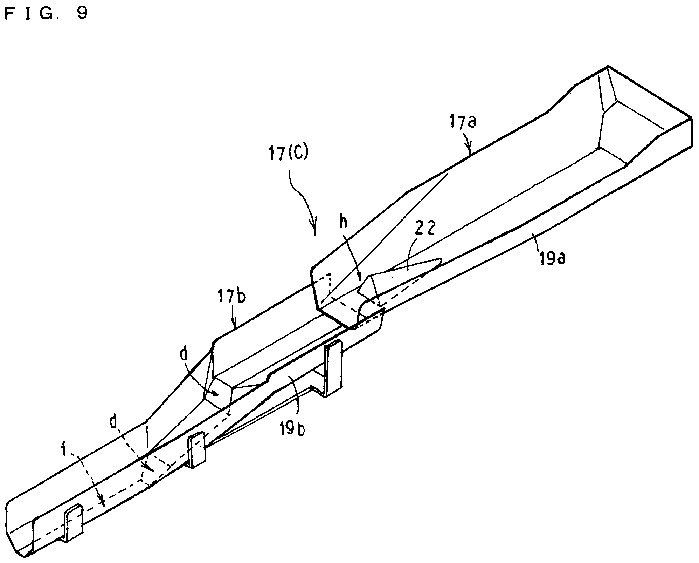

Figs. 7(A) and 7(B) illustrate the standard-spec linear feeder 17, while Figs. 8(A), 8(B) and 9 illustrate the different-spec linear feeder 17(C).

Description of structural details is hereinafter given to the different-spec linear feeder 17(C) that is suitable for use in transport of small quantities of sticky articles like small rice crackers or small fishes cooked in mirin.

The upstream linear feeder 17a of the different-spec linear feeder 17(C), which is illustrated in Figs. 8(A), 8(B) and 9, has a trough 19a having a reversed trapezoidal shape in cross section. In this trough 19a, its bottom surface and side surfaces constituting the reversed trapezoidal shape form a transport path for the articles to be transported. In the transport path of this trough, a guiding protrusion 22 is formed at an intermediate position; a center position in this example, in the direction of width (lateral direction) relatively downstream in the direction of transport of articles. The guiding protrusion 22 serves to split and guide the articles being transported to lateral sides of the transport path in the direction of width.

The guiding protrusion 22 has a triangular shape in plan view elongated in the front-back direction and progressively greater in width in the direction of transport. The shape of this guiding protrusion 22 in side view is like a mountain linearly uprising by degrees in the direction of transport from the trough's bottom surface. The guiding protrusion 2 has, at a center position in the lateral direction, a ridge-like portion elongated in the front-back direction. The guiding protrusion 2 further has curved surfaces at sides in which the ridge-like portion is smoothly curved.

The guiding protrusion 22 provides, at its sides, transport passages "h" progressively narrower in the direction of transport. These transport passages "h" may preferably have, at the end of this guiding protrusion, a lateral width that allows two or three small fishes to pass through

The downstream linear feeder 17b of the different-spec linear feeder 17(C) has a trough 19a having a reversed trapezoidal shape in cross section. This trough has a bottom surface bending like a stepwise slope directed downward in the direction of transport of articles. A transport passage "f' at the lowest level located at an article-outgoing end of the trough 19b may have a small width only large enough to let through a row of articles, for example, a row of small fishes lined up with their heads or tails being directed forward.

The different-spec linear feeder 17(C) is configured to operate as described below. The articles supplied into and received by the upstream linear feeder 17a are vibrated and thereby transported forward. The articles being transported are then split by the guiding protrusion 22 to right and left and are thrown into the downstream linear feeder 17b. When, for example, the articles likely to stick together in a lump arrive at the guiding protrusion 22, the articles are guided to run over the guiding protrusion 22 and then vibrated and split onto two sides of this guiding protrusion. The articles may be thus split into smaller quantities and transported through narrow transport passages "h".

The articles transferred from the upstream linear feeder 17a into the downstream linear feeder 17b are subject to a certain drop impact due to a difference in height between these feeders 17a and 17b, which may allow the articles to easily split into pieces. The articles transported by the downstream linear feeder 17b drop through two differences in height "d" and may thereby easily split, and then arrive at a narrow, most downstream transport path "f". In this transport path "f', the articles may be lined up in a row and transported in a small quantity at a time, for example, one small fish at a time, into the supply hopper 6 of the weighing unit 4.

According to this embodiment, the guiding protrusion 22 formed in the trough 19a of the upstream linear feeder 17a may serve to split any articles likely to stick together in a lump, such as small fishes, onto two sides of the trough in the direction of width while the articles are being vibrationally transported. The articles, while travelling through the transport passages progressively narrower at sides of the guiding protrusion, may be thus split apart in small quantities at two sides of the trough in the direction of width and then transported in small quantities.

Under the drop impact generated at the time of the articles being transferred from the trough 19a of the upstream linear feeder 17a into the trough 19b of the downstream linear feeder 17b, any articles likely to stick together in a lump may be successfully split apart and smoothly transported. Thus, very small quantities of articles, even one each of small fishes at a time, may be successfully transported out of the trough 19b of the downstream linear feeder 17b into the supply hopper 6 of the weighing unit 4.

As illustrated in Fig. 5, the support table 18 of the article supplier 5 has a reject mechanism 50 disposed to discharge the articles oversupplied into and received by the weighing hopper 6.

The reject mechanism 50 includes a reject chute 51 allowed to horizontally move forward and backward, and a collection chute 52 and a collection container 53 used to collect the articles introduced into and received by the reject chute 51.

The reject chute 51 is disposed so as to face a first transport path (a) of the weighing hopper 7 from the outer front side. The reject chute 51 is driven by an air cylinder 54 to move toward and away from the first transport path (a). At normal times, the reject chute 51 retreats to and stays at a position on the outer side of the first transport path (a), as illustrated in Fig. 5. Thus, the reject chute 51 may be prevented at normal times from interfering with discharge of the articles into the first collection chute 9 after the outer gate 7a of the weighing hopper 7 is opened.

In case a weight value measured by the weighing hopper 7 suggests an oversupply of the articles inappropriate for the combinatorial computations, the reject chute 51 moves to and stays on the first transport path (a), which is REJECT status. When the outer gate 7a of the weighing hopper 7 is opened during the REJECT status, the articles in excess in the weighing hopper 7 are discharged into the reject chute 51 and dropped downward into the collection container 53 through the collection chute 52. After the articles are thus collected, the reject chute 51 moves to the original position away from the first transport path (a), and the weighing hopper 7, with the outer gate 7a being closed, is ready for the next combinatorial computations.

The reject chute 51 has, at its edge, a guide member 55 made of a plate material. The guide member 55 is at a position facing the first transport path (a) from the outer side when the reject chute 51 is retreated to and staying at the position on the outer side of the first transport path (a). At this position, the guide member 55 prevents the articles from flying off outward that are discharged from the weighing hopper 7 when the outer gate 7a is opened, so that the articles are properly guided into the first collection chute 9.

### OTHER EMBODIMENTS

The present invention may be feasible as described below.

1) The earlier embodiment was described in reference to mixing and weighing articles that range in a wide variety. Optionally, the weighing device according to the present invention a fewer number of sets of hoppers may be applicable for use in mixing and weighing a single type of articles.

2) The different-spec linear feeder 17(C) may be a multi-stage linear feeder with three or more stages arranged in tandem.

3) The different-spec linear feeder 17(C) may solely include a linear feeder with a guiding protrusion 22. In this instance, a transport path on the article-outgoing end of the linear feeder may preferably have a small width only large enough to guide the articles lined up in a row.

4) The guiding protrusion may have a triangular wall-like shape in plan view having an equal height along its whole length in the direction of transport and having a sharp edge upstream in the direction of transport.

5) The guiding protrusion 22, instead of being located at the center in the direction of width of the transport path, may be located at a position displaced from the center. Depending on the type(s) of articles to be weighed, the guiding protrusion 22 may be formed at two or more positions in the direction of transport to allow the articles to split and disperse more than once.

### REFERENCE SIGNS LIST

- 1A: weighing device
- 1B: weighing device
- 4: weighing unit
- 5: article supplier
- 6: supply hopper
- 7: weighing hopper
- 8: memory hopper
- 15: retaining tank
- 16: retaining hopper
- 17: linear feeder
- 17a: upstream linear feeder
- 17b: downstream linear feeder
- 19a: trough
- 19b: trough
- 22: guiding protrusion
- h: transport path
- f: transport passage

## Claims

1. A linear feeder configured to vibrate a trough to transport an article on the trough, the linear feeder comprising a guiding protrusion on a bottom surface of a transport path of the trough for the article, the guiding protrusion being formed in a direction of transport of the article at an intermediate position in a direction of width of the transport path, the guiding protrusion being progressively greater in dimension in the direction of width, the transport path comprising transport passages progressively smaller in width at sides of the guiding protrusion.

2. The linear feeder according to claim 1, wherein the guiding protrusion is formed at a position on a downstream side in the direction of transport of the article, and the guiding protrusion is formed to a progressively greater height in the direction of transport of the article.

3. The linear feeder according to claim 1 or 2, further comprising two troughs respectively disposed on an upstream side and on the downstream side in the direction of transport, wherein
the two troughs are disposed in tandem, with one of the two troughs being located at an upper position than the other, in the form of a stepwise slope directed downward, and
the trough on the upstream side has the guiding protrusion and the transport passages progressively smaller in width.

4. The linear feeder according to claim 3, further comprising a vibrating mechanism operable to vibrate the two troughs independently from each other.

5. A combination weighing device, comprising a plurality of the linear feeders according to claim 1 or 2.

6. A combination weighing device, comprising a plurality of the linear feeders according to claim 3.

7. A combination weighing device, comprising a plurality of the linear feeders according to claim 4.

8. The combination weighing device according to claim 5, comprising:
a plurality of the linear feeders linearly arranged next to each other; and
a plurality of weighing units linearly arranged next to each other, the plurality of weighing units each comprising a supply hopper and a weighing hopper that are vertically disposed, wherein
the supply hoppers each receive the article transported by and supplied from a respective one of the plurality of the linear feeders, and
the weighing hoppers each retain the article discharged from a respective one of the supply hoppers and measure a weight of the article retained.

9. The combination weighing device according to claim 6, comprising:
a plurality of the linear feeders linearly arranged next to each other; and
a plurality of weighing units linearly arranged next to each other, the plurality of weighing units each comprising a supply hopper and a weighing hopper that are vertically disposed, wherein
the supply hoppers are each adapted to receive the article transported by and supplied from a respective one of the plurality of the linear feeders, and
the weighing hoppers are each adapted to retain the article discharged from a respective one of the supply hoppers and then measure a weight of the article retained.

10. The combination weighing device according to claim 7, comprising:
a plurality of the linear feeders linearly arranged next to each other; and
a plurality of weighing units linearly arranged next to each other, the plurality of weighing units each comprising a supply hopper and a weighing hopper that are vertically disposed, wherein
the supply hoppers are each adapted to receive the article transported by and supplied from a respective one of the plurality of the linear feeders, and
the weighing hoppers are each adapted to retain the article discharged from a respective one of the supply hoppers and then measure a weight of the article retained.
